# EUROPÄISCHE PATENTSCHRIFT

(11) **EP 2 247 839 B1**
(45) Veröffentlichungstag und Bekanntmachung des Hinweises auf die Patenterteilung: **06.01.2016**
(21) Anmeldenummer: 08872881.1
(22) Anmeldetag: 11.11.2008
(51) Int. Cl.: F01D 17/20, F01D 17/24, F02C 6/12, F02M 25/07, F16K 1/20, F02B 37/18

(54) **TURBOLADER MIT EINER BETÄTIGUNGSEINRICHTUNG ZUM ÖFFNEN UND SCHLIESSEN EINES WASTEGATE-KANALS**
TURBOCHARGER COMPRISING AN ACTUATOR FOR OPENING AND CLOSING A WASTEGATE DUCT
TURBOCOMPRESSEUR AVEC UN DISPOSITIF D'ACTIONNEMENT POUR OUVRIR ET FERMER UN CANAL DE LIMITATION DE PRESSION DE SURALIMENTATION

(30) Priorität: 27.02.2008 DE 102008011416
(43) Veröffentlichungstag der Anmeldung: 10.11.2010
(73) Patentinhaber: Continental Automotive GmbH, 30165 Hannover (DE)
(72) Erfinder: HELDMANN, Markus, 92272 Freudenberg (DE); BÖNING, Ralf, 67829 Reiffelbach (DE); CLAUS, Hartmut, 67269 Grünstadt (DE); FRANKENSTEIN, Dirk, 67592 Flörsheim-Dalsheim (DE); FÄTH, Holger, 67136 Fussgönheim (DE); KRAUSS, Stefan, 67269 Grünstadt (DE)
(86) Internationale Anmeldenummer: PCT/EP2008/065291
(87) Internationale Veröffentlichungsnummer: WO 2009/106161

(56) Entgegenhaltungen:
- EP-A- 1 544 449
- EP-A- 1 707 790
- EP-B- 0 377 712
- DE-A1- 3 336 879
- DE-A1-102006 021 185
- DE-C1- 4 439 432
- US-A- 3 575 376

## Beschreibung

Die Erfindung betrifft einen Turbolader mit einer Betätigungseinrichtung zum Öffnen und Schließen eines Wastegate-Kanals.

Aus der EP·0 377 712 B1 ist eine aufgeladene Kolbenbrennkraftmaschine mit einer Abgasturboladerbaugruppe bekannt. Hierbei ist eine Bypaß - Absperreinrichtung vorgesehen. Diese ist mit einem als Klappe ausgebildeten, drehfest mit einer Achse verbundenen Verschlussteil ausgebildet. Die durch ein Gehäuse nach außen geführte Achse trägt dabei einen drehfest mit ihr verbundenen Hebel, der mit einem über eine Steuerleitung fernbetätigbaren Verstellmechanismus gekoppelt ist. Die Schließstellung des Verschlussteils ist bei abgeschalteter Abgasturboladerbaugruppe durch einen mit einem Hebel zusammenwirkenden, fernbetätigbaren Riegel arretiert. Der Riegel bildet dabei eine Kolbenstange eines in einem Gehäuse geführten Kolbens, der durch eine Druckfeder in Arretierstellung und durch Steuerdruck in Entriegelungsstellung bringbar ist.

Das Öffnen und Schließen des Wastegates, das Bypass-Ventil der Turbine eines Abgasturboladers, erfolgt mittels einer Klappe die von einem pneumatischen Aktuator gesteuert wird. Die Regelung mittels eines pneumatischen Aktuators birgt einige Nachteile. Dies sind beispielsweise das Flattern der Klappe im Abgasstrom kurz vor dem Öffnen der Klappe und die damit verbundene Zertrümmerung des Klappensitzes. Außerdem ist es mittels einer Überdruckdose nur möglich zu regeln, wenn genügend Ladedruck vorhanden ist.

Aus diesem Grund soll die Regelung durch einen elektrischen Aktuator übernommen werden. Aufgrund der geringeren Leistungsdichte des elektrischen Aktuators bezogen auf die Druckdose würde die bisherige Größe des Stellgebers aber deutlich überschritten werden.

Die bisherige Schließkinematik der Wastegate-Klappe mit ihrem hohen Stellmoment hat bei der Regelung mit einem elektrischen Aktuator eine hohe Dauerbestromung und eine hohe Energieaufnahme von einem Boardnetz eines Kraftfahrzeugs zur Folge.

Die oben genannte geringere Leistungsdichte ist vor allem aufgrund des begrenzten Bauraums im Motorraum ein Problem, was die Temperaturproblematik durch Eigenerwärmung des elektrischen Aktuators weiter verschärft. Ein kompaktes Package des Turboladers kann für die bisher bekannte Kinematik mit einem leistungsfähigen elektrischen Aktuator nicht realisiert werden.

Demnach ist es die Aufgabe der vorliegenden Erfindung, eine verbesserte Betätigungseinrichtung zum Öffnen und Schließen eines Wastegate-Kanals eines Turboladers bereitzustellen.

Diese Aufgabe wird durch einen Turbolader mit den Merkmalen des Patentanspruchs 1 gelöst.

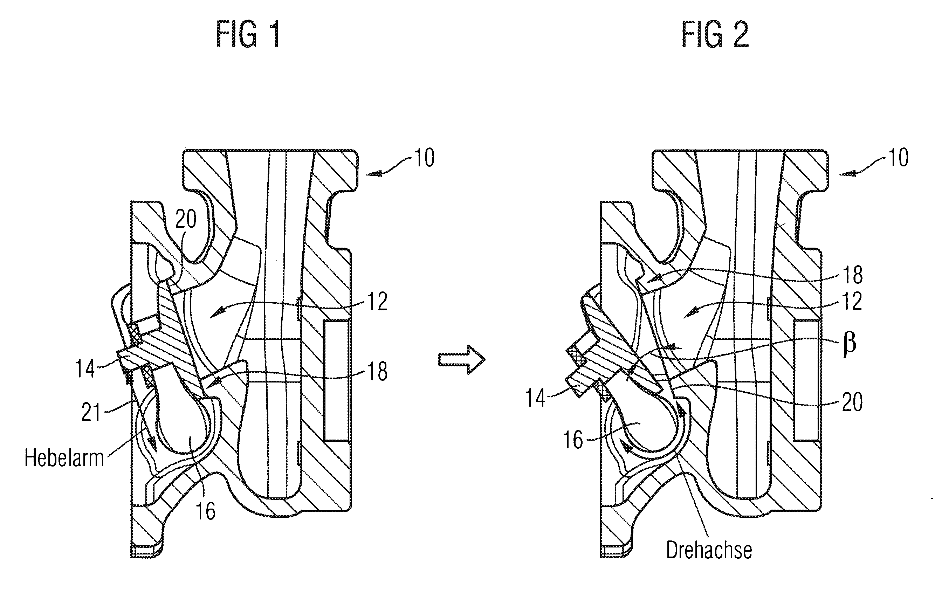

Der Turbolader mit dem Wastegate-Kanal hat dabei den Vorteil, dass durch das einschwenkbare Schließelement ein kleinerer Hebelarm der Schließkinematik erzielt werden kann. Dadurch kann beispielsweise auch ein elektrischer Aktuator zum Betätigen der Betätigungseinrichtung und deren Schließelements vorgesehen werden. Im Stand der Technik, wie im Folgenden noch anhand der Fig. 1 und 2 näher erläutert wird, erfolgt lediglich ein auf und zu schwenken der Wastegate-Klappe aber kein Einschwenken der Klappe in den Wastegate-Kanal.

Das Schließelement weist zumindest in einem Bereich, in welchem es an einer korrespondierenden Anlagefläche des Wastegate-Kanals anliegt, ein Kugelsegment auf. Dies hat den Vorteil, dass das Einschwenken in den Wastegate-Kanal besonders einfach ist.

Die Längsachse des Schließelements verläuft im Wesentlichen parallel zu einer Achse, die durch den Mittelpunkt des Schließabschnitts des Schließelements, hier den Mittelpunkt des verlängerten runden Abschnitts bzw. den Mittelpunkt des Kugelsegments des Schließelements verläuft. Dies hat den Vorteil, dass der Schließvorgang des Schließelements durch eine Drehbewegung des Schließelements in den Wastegate-Kanal hinein erfolgt. D.h., dass das Kugelsegment sich beim Schließvorgang nicht einfach um eine Achse dreht, die durch den Mittelpunkt des Kugelsegments verläuft. Der Mittelpunkt des Kugelsegments liegt dagegen zwischen einer Dichtfläche und der Drehachse. Dies bewirkt, dass der Schließvorgang nicht nur aus einer reinen Drehbewegung, sondern auch durch eine axiale Relativbewegung in Richtung der Dichtfläche erfolgt. Dadurch wird ein Entlangschaben des Schließelements an der Anlagefläche bzw. Dichtfläche des Wastegate-Kanals verhindert.

Vorteilhafte Ausgestaltungen und Weiterbildungen der Erfindung ergeben sich aus den Unteransprüchen, sowie der Beschreibung unter Bezugnahme auf die Zeichnungen.

Gemäß einer weiteren erfindungsgemäßen Ausführungsform ist die korrespondierende Anlagefläche des Wastgate-Kanals, an welchem das Schließelement in geschlossenem Zustand anliegt, so ausgebildet, dass die korrespondierende Anlagefläche mit dem Schließelement beispielsweise im Wesentlichen einen Linienkontakt herstellt, wenn das Schließelement den Wastegate-Kanal verschließt. Grundsätzlich ist aber auch ein flächiger Kontakt möglich. Der Linienkontakt hat den Vorteil, dass eine bessere Dichtwirkung erzielt werden kann.

In einer anderen erfindungsgemäßen Ausführungsform weist die Betätigungseinrichtung einen Arm auf, der mit dem Schließelement verbunden ist und über welchen das Schließelement in eine geöffnete und geschlossene Position schwenkbar ist, in welcher der Wastegate-Kanal vollständig geschlossen ist. Die Längsachse des Schließelements kann hierbei zu der Drehachse des Arms beabstandet sein bzw. die Längsachse des Schließelements kann zu einer Senkrechten durch den Drehpunkt des Arms um einen Winkel geneigt ausgebildet sein. Hierdurch weist das Schließelement nur einen kleinen Hebelarm auf, im Vergleich zu dem Hebelarm einer Wastegate-Klappe. Dies bedeutet, dass die Stellkraft bei dem Schließelement ebenfalls deutlich reduziert werden kann.

In einer weiteren erfindungsgemäßen Ausführungsform schneidet die Längsachse des Schließelements die Drehachse des Arms bzw. verläuft durch den Drehpunkt des Arms. Dadurch kann der Hebelarm im Wesentlichen sogar auf Null reduziert werden.

In einer anderen erfindungsgemäßem Ausführungsform ist der Arm abgewinkelt ausgebildet. Dabei kann der Arm beispielsweise einen um 90° abgewinkelten Abschnitt aufweisen, an welchem beispielsweise das Schließelement befestigbar ist. Der abgewinkelte Abschnitt des Arms weist hierzu z.B. eine Aufnahme für das Schließelement auf. Die Aufnahme für das Schließelement ist beispielsweise derart ausgebildet, dass das Schließelement mit seiner Längsachse zu einer Senkrechten des Drehpunkts des Arms geneigt ist oder auf der Senkrechten des Drehpunkts des Arms liegt. Auf diese Weise kann ein kleiner Hebelarm realisiert werden, der im Wesentlichen bis Null betragen kann.

Gemäß einer weiteren erfindungsgemäßen Ausführungsform ist der Arm in Form einer durchgehenden Welle ausgebildet. Dabei kann das Schließelement derart an der Welle befestigt sein, so dass die Längsachse des Schließelements die Drehachse der Welle schneidet oder alternativ zu dieser beabstandet ist, vergleichbar wie bei dem abgewinkelten Abschnitt. Auf diese Weise kann ebenfalls ein kleiner Hebelarm realisiert werden, der im Wesentlichen bis auf Null reduziert werden kann.

In einer anderen erfindungsgemäßen Ausführungsform kann zur Betätigung der Betätigungseinrichtung wenigstens ein elektrischer Aktuator und/oder eine Druckdose eingesetzt werden. Ein elektrischer Aktuator eignet sich bei der erfindungsgemäßen Schließkinematik besser als bei den bekannten Wastegate-Klappen. Des Weiteren kann bei der erfindungsgemäßen Schließkinematik die Druckdose verkleinert werden.

Die Erfindung wird nachfolgend anhand der in den schematischen Figuren der Zeichnungen angegebenen Ausführungsbeispiele näher erläutert. Es zeigen:
- Fig. 1: eine Schnittansicht eines Teils eines Turbinengehäuses und seines Wastegate-Kanals, wobei der Wastegate-Kanal mittels einer Wastegate-Klappe gemäß dem Stand der Technik geschlossen ist;
- Fig. 2: die Schnittansicht gemäß Fig. 1, wobei die Wastegate-Klappe gemäß dem Stand der Technik den Wastegate-Kanal öffnet;
- Fig. 3: eine Schnittansicht eines Turbinengehäuses und seines Wastegate-Kanals, welcher durch eine Betätigungseinrichtung gemäß einer ersten erfindungsgemäßen Ausführungsform geöffnet ist;
- Fig. 4: die Schnittansicht gemäß Fig. 3, wobei die Betätigungseinrichtung den Wastegate-Kanal zu schließen beginnt;
- Fig. 5: die Schnittansicht gemäß Fig. 3 und 4, wobei der Wastegate-Kanal durch die Betätigungseinrichtung vollständig geschlossen ist;
- Fig. 6: eine weitere Schnittansicht des Turbinengehäuses und seines Wastegate-Kanals, welcher durch die Betätigungseinrichtung gemäß der ersten erfindungsgemäßen Ausführungsform geschlossen ist;
- Fig. 7: eine perspektivische Ansicht der Schnittansicht gemäß Fig. 6;
- Fig. 8: eine weitere perspektivische Ansicht der Schnittansicht gemäß Fig. 6 schräg von der Seite aus gesehen;
- Fig. 9: eine weitere perspektivische Ansicht der Schnittansicht gemäß Fig. 6 von der Seite aus gesehen;
- Fig. 10: eine perspektivische Ansicht des Turbinengehäuses und der Betätigungseinrichtung von hinten aus gesehen;
- Fig. 11: eine Schnittansicht eines Turbinengehäuses und seines Wastegate-Kanals, welcher durch eine Betätigungseinrichtung gemäß einer zweiten erfindungsgemäßen Ausführungsform geöffnet ist;
- Fig. 12: die Schnittansicht gemäß Fig. 11, wobei die Betätigungseinrichtung den Wastegate-Kanal zu schließen beginnt; und
- Fig. 13: die Schnittansicht gemäß Fig. 11 und 12, wobei der Wastegate-Kanal durch die Betätigungseinrichtung vollständig geschlossen ist.

In allen Figuren sind gleiche bzw. funktionsgleiche Elemente und Vorrichtungen - sofern nichts anderes angegeben ist - mit denselben Bezugszeichen versehen worden.

In Fig. 1 ist zunächst eine Schnittansicht eines Teils eines Turbinengehäuses 10 und seines Wastegate-Kanals 12 dargestellt, wobei der Wastegate-Kanal 12 mittels einer Wastegate-Klappe 14 gemäß dem Stand der Technik geschlossen ist.

Die Wastegate-Klappe 14 ist dabei an einem Hebelelement 16 befestigt. Durch Drehen des Hebelelements 16 wird die Wastegate-Klappe 14 ausgelenkt bzw. geschwenkt. Über den Drehwinkel β der Wastegate-Klappe 14 können hierbei verschiedene Öffnungsquerschnitte des Wastegate-Kanals 12 erzielt und so der Ladedruck gesteuert werden. Zwischen dem Wastegate-Kanal 12 und der Wastegate-Klappe 14 ist in geschlossenem Zustand eine "Fläche zu Fläche" Dichtung vorgesehen. Das bedeutet, dass in einem geschlossenen Zustand die Wastegate-Klappe 14 flächig auf einem Endabschnitt 18 des Wastegate-Kanals 12 aufliegt und diesen abdichtet. Die Wastegate-Klappe 14 weist hierbei eine flächige bzw. ebene Auflagefläche 20 auf. Diese flächige Dichtung hat jedoch den Nachteil, dass nicht immer eine ausreichende Dichtwirkung gegeben ist.

In Fig. 2 ist das Öffnen des Wastegate-Kanals 12 mittels der Wastegate-Klappe 14 gezeigt. Hierzu schwenkt das Hebelelement 16, an welchem die Wastegate-Klappe 14 befestigt ist, entgegen dem Uhrzeigersinn. Wie zuvor bereits beschrieben, kann hierbei über den Drehwinkel β der Wastegate-Klappe 14 ein jeweils geeigneter Öffnungsquerschnitt des Wastegate-Kanals 12 eingestellt werden.

Eine solche Wastegate-Klappe 14 wird normalerweise von einer Druckdose angesteuert, um den Wastegate-Kanal 12 zu öffnen und zu schließen. Die benötigte Kraft um den Wastegate-Kanal 12 zu schließen ist aufgrund des großen Hebelarms der Wastegate-Klappe 14 und des daraus resultierenden Moments jedoch relativ groß. Ein elektrischer Aktuator zum Betätigen der Wastegate-Klappe 14 bzw. deren Hebelelements 16 ist daher weniger geeignet, da die Kraft die er hierzu aufwenden muss verhältnismäßig groß ist.

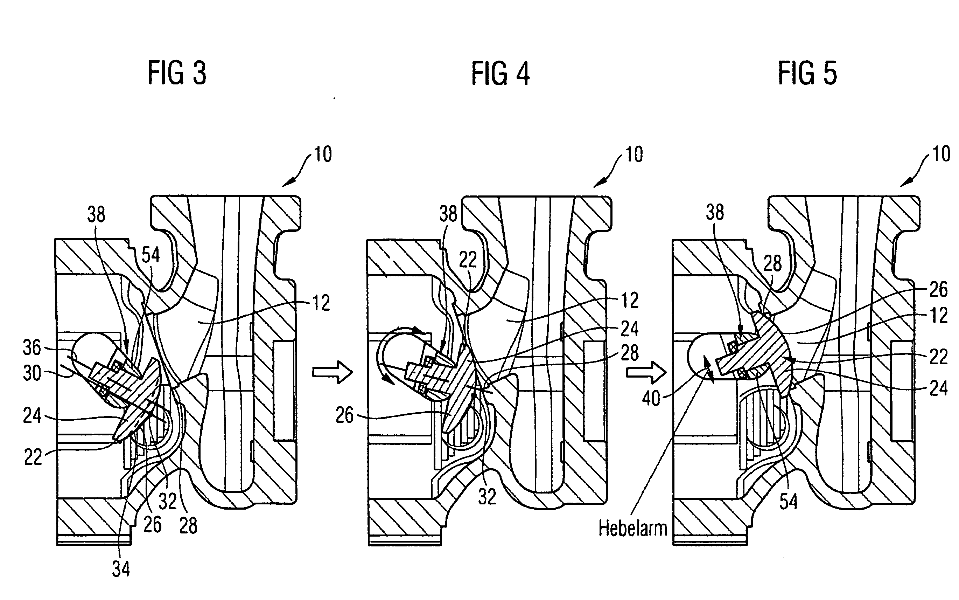

In Fig. 3 ist nun eine Schnittansicht eines Turbinengehäuses 10 und seines Wastegate-Kanals 12 gezeigt, wobei der Wastegate-Kanal 12 durch eine Betätigungseinrichtung 22 gemäß einer ersten erfindungsgemäßen Ausführungsform geöffnet und geschlossen wird, d.h. beispielsweise teilweise geöffnet, vollständig geöffnet und geschlossen wird, vergleichbar wie im zuvor beschriebenen Stand der Technik.

Die Betätigungseinrichtung 22 weist dabei ein Schließelement 24 auf. Dieses Schließelement 24 weist beispielsweise ein Kugelsegment 26 auf, das in einem geschlossenen Zustand des Wastegate-Kanals 12 an einer entsprechend konischen Anlagefläche 28 des Wastegate-Kanals 12 anliegt. Mit anderen Worten, die aus dem Stand der Technik bekannte Abdichtung "Fläche auf Fläche", wie sie mit Bezug auf die Fig. 1 und 2 beschrieben wurde, wird durch eine Abdichtung des Kugelsegments 26 in die konische Fläche 28 ersetzt. Die daraus resultierende Dichtgeometrie ist demnach ein Kreis, d.h. es besteht ein Linienkontakt zwischen dem kugelförmigen Schließelement 24 und der konischen Anlagefläche 28 des Wastegate-Kanals 12.

Des Weiteren erfolgt das Schließen durch eine Drehbewegung des Schließelements 24 in den Wastegate-Kanal 12 hinein, wie in den Fig. 3, 4 und 5 gezeigt ist. In Fig. 3 ist der Wastegate-Kanal 12 zunächst durch das Schließelement 24 geöffnet, das Schließelement 24 ist hierbei aus dem Kanal 12 herausgedreht. Um nun den Wastegate-Kanal 12 zu schließen, wird das Schließelement 24 entgegen dem Uhrzeigersinn in Fig. 4 gedreht. Dabei bewegt sich das Schließelement 24 schrittweise in den Wastegate-Kanal 12 hinein. In Fig. 5 ist der Wastegate-Kanal 12 mittels dem Schließelement 24 vollständig verschlossen. Hierbei liegt das Schließelement 24 mit seinem Kugelsegment 26 in Linienkontakt an dem konischen Anlageabschnitt 28 des Wastegate-Kanals 12 an.

Das Kugelsegment 26 des Schließelements 24 dreht sich beim Schließvorgang dabei nicht um eine Achse 30, die durch den Mittelpunkt des Kugelsegments verläuft sondern der Mittelpunkt 32 des Kugelsegments 26 liegt zwischen der Dichtfläche und der Drehachse 36. Aus diesem Grund resultiert der Schließvorgang nicht nur aus einer reinen Drehbewegung sondern auch durch eine axiale Relativbewegung in Richtung der Dichtfläche. Statt dem Kugelsegment 26 kann auch nur ein runder, umlaufender Abschnitt 34 vorgesehen sein, in dem Bereich in welchem das Schließelement 24 an der Anlagefläche 28 des Wastgate-Kanals 12 anliegt, wie in Fig. 3 mit einer gestrichelten Linie angedeutet ist. Dabei dreht sich das Schließelement 24 ebenfalls nicht um die Achse 30, die durch den Mittelpunkt 32 der gedachten Verlängerung des runden Abschnitts 34 geht, sondern der Mittelpunkt 32 liegt hier ebenfalls wie beim Kugelsegment 26 zwischen Dichtfläche und Drehachse 36.

Diese Drehbewegung bzw. das Einschwenken in den Wastegate-Kanal 12 wird dabei in der Ausführungsform, wie sie in den Fig. 3 bis 5 dargestellt ist, mit einem abgewinkelten Steller bzw. Arm 38 vollzogen, um somit Toleranzen und Wärmeausdehnungen kompensieren zu können. Außerdem wird dadurch verhindert, dass aufgrund von Wärmedehnungen Zwangskräfte in der Lagerung oder ein Klemmen des Schließelements 24 hervorgerufen werden. Ein Weiterer Vorteil ist, dass der Hebelarm 40 der Betätigungseinrichtung 22 und seines Schließelements 24 kleiner ist als der Hebelarm 21 der Wastegate-Klappe 14, wie er in der Fig. 1 eingezeichnete ist.

Die Ausführungsform in den Fig. 3 bis 5 hat außerdem den Vorteil, dass eine sog. Fail-Safe-Funktion sichergestellt werden kann. Das bedeutet, dass die Betätigungseinrichtung 22 bzw. deren Schließelement 24 automatisch öffnet, wenn der Druck im Wastegate-Kanal 12 zu groß wird bzw. wenn der Wastegate-Kanal 12 ungewollt verschlossen ist. Dadurch, dass die Betätigungseinrichtung 22 einen kleinen Hebelarm 40 aufweist, kann diese Fail-Safe-Funktion sichergestellt werden.

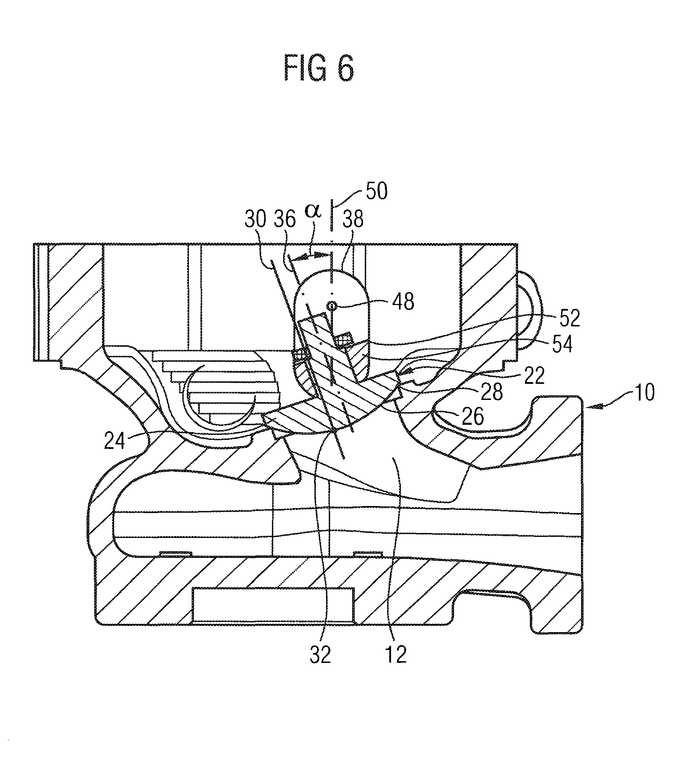

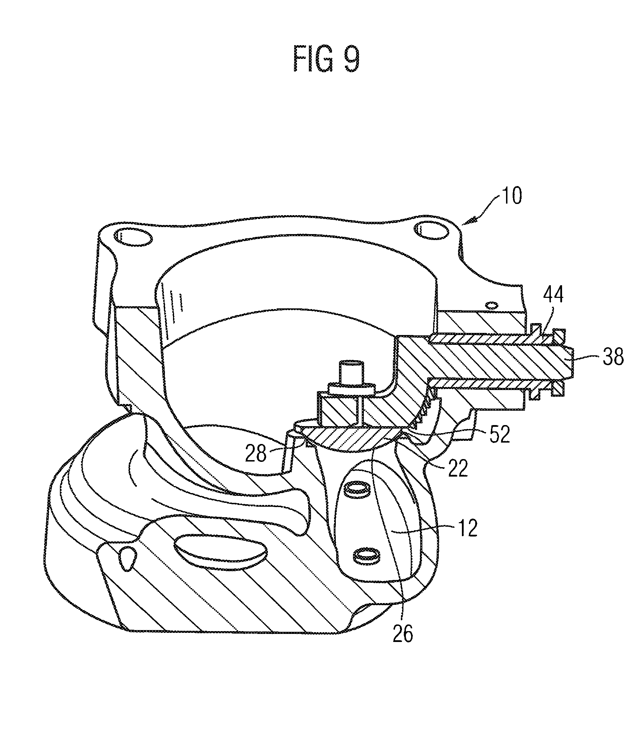

Die Betätigungseinrichtung 22 und ihr Schließelement 24 gemäß der Ausführungsform, wie sie in den Fig. 3 bis 5 gezeigt ist, werden des Weiteren näher anhand der Fig. 6 bis 10 erläutert.

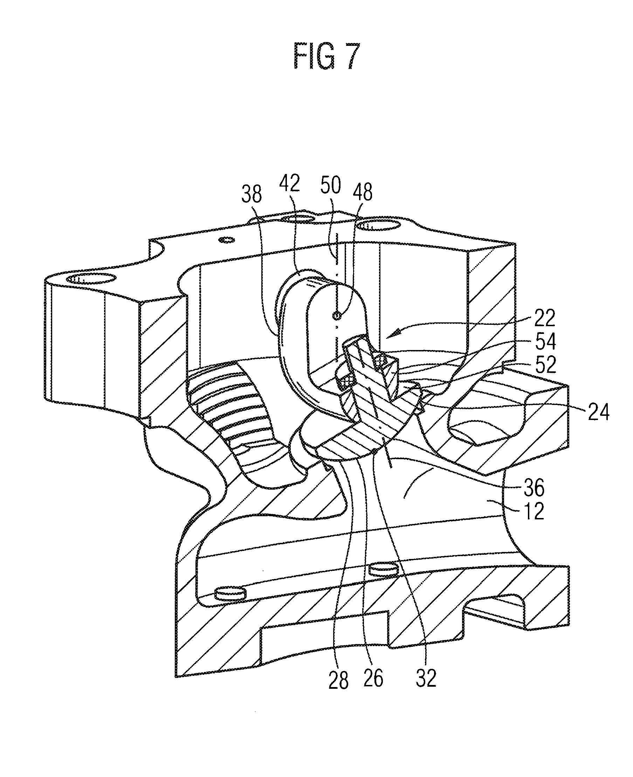

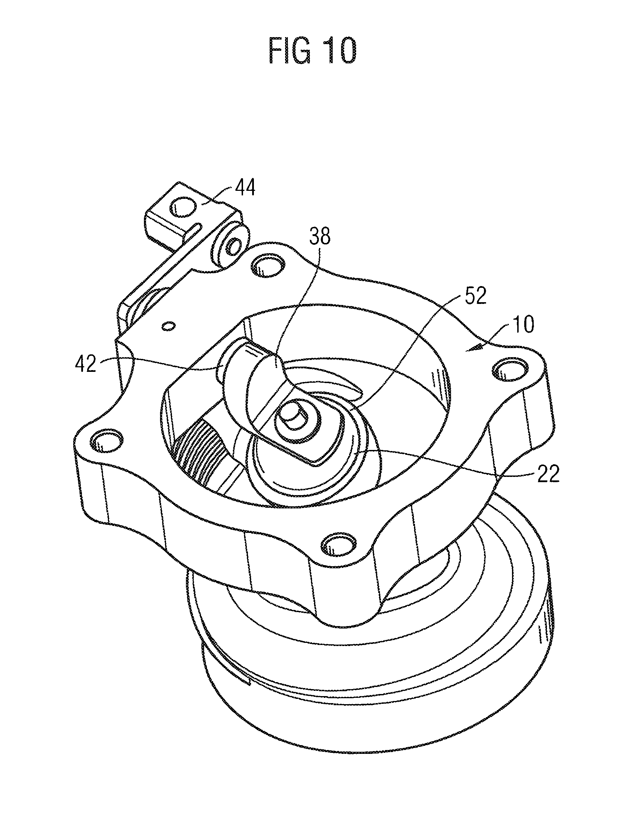

In Fig. 6 ist nun eine Schnittansicht durch das Turbinengehäuse 10 und seinen Wastegate-Kanal 12 gezeigt, wobei der Kanal 12 mittels der Betätigungseinrichtung 22 und deren Schließelement 26 geschlossen ist. In den Fig. 7 bis 9 sind des Weiteren verschiedene perspektivische Teilschnittansichten des Turbinengehäuses 10 und der Betätigungseinrichtung 22 zum Öffnen und Schließen des Wastegate-Kanals 12 gezeigt. Darüber hinaus ist in Fig. 10 eine perspektivische Ansicht der Betätigungseinrichtung 22 von der Rückseite aus gezeigt.

Das Schließelement 24 ist dabei an einem abgewinkelten Arm 38 der Betätigungseinrichtung 22 befestigt, wie in den Fig. 6 bis 10 gezeigt ist. Der Arm 38 ist dabei in einer Hülse 42 in dem Turbinengehäuse 10 gelagert (Fig. 7-10) und wird über ein Betätigungselement 44 gedreht, wie in Fig. 10 gezeigt ist. Das Betätigungselement 44 kann dabei Teil eines Aktuators, beispielsweise eines elektrischen Aktuators, oder einer Druckdose sein oder mit diesen entsprechend gekoppelt sein.

Die Längsachse bzw. Drehachse 36 des Schließelements 24 verläuft hierbei nicht durch einen Drehpunkt 48 des Arms bzw. dessen Drehachse, sondern ist hierzu beabstandet. Mit anderen Worten, die Längsachse bzw. Drehachse 36 des Schließelements 24 liegt nicht auf einer Senkrechten 50 durch einen Drehpunkt 48 des Arms 38, sondern ist zu der Senkrechten 50 um einen Winkel α geneigt angeordnet, wie in Fig. 6 angedeutet ist.

Wie zuvor beschrieben ist der Hebelarm 40 des Schließelements 24, wie er in den Fig. 5 und 6 dargestellt ist, kleiner als der Hebelarm 21 der Wastegate-Klappe 14in Fig. 1.

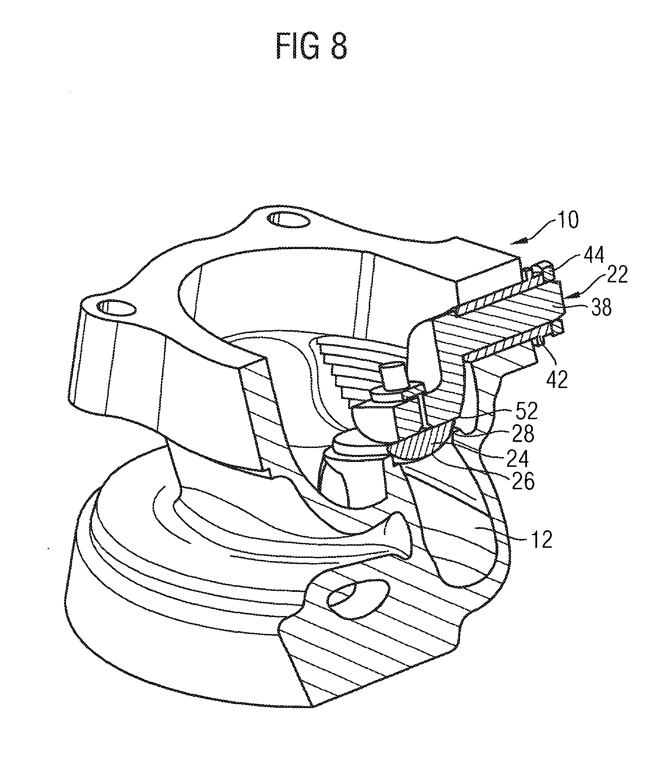

Der Arm 38, wie er beispielsweise in den Fig. 8, 9 und 10 dargestellt ist, muss dabei nicht unbedingt abgewinkelt sein, hier beispielsweise in einem im Wesentlichen rechten Winkel, wobei auch alle anderen Winkel denkbar sind. Entscheidend ist, dass das Schließelement 24 mit seiner Längsachse bzw. Drehachse 36 nicht die Drehachse des Arms 38 schneidet bzw. durch dessen Drehpunkt 48 verläuft. Der abgewinkelte Arm 38 weist hierbei an seinem abgewinkelten Abschnitt 52 beispielsweise eine entsprechende Aufnahme 54 auf, in welcher das Schließelement 24 mit seiner Längsachse bzw. Drehachse 36 um einen Winkel α geneigt zu einer Senkrechten 50 der Drehachse des Arms 38 angeordnet werden kann.

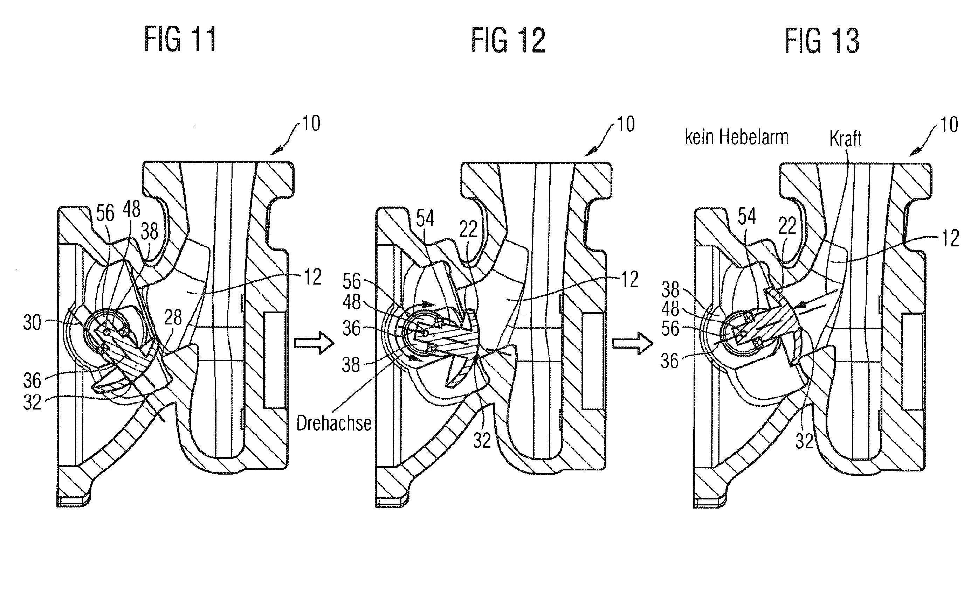

In den Fig. 11 bis 13 ist eine zweite erfindungsgemäße Ausführungsform der Betätigungseinrichtung 22 gezeigt. In Fig. 11 ist dabei eine Schnittansicht des Turbinengehäuses 10 und des Wastegate-Kanals 12 gezeigt, wobei der Wastegate-Kanal 12 durch die Betätigungseinrichtung 22 gemäß der zweiten Ausführungsform geöffnet ist. In Fig. 12 wird der Wastegate-Kanal 12 geschlossen, das Schließelement 24 der Betätigungseinrichtung 22 wird hierzu schrittweise in den Wastegate-Kanal 12 eingeschwenkt. In Fig. 13 ist der Wastegate-Kanal 12 mittels dem Schließelement 24 vollständig geschlossen.

Im Gegensatz zu der ersten Ausführungsform weist die zweite Ausführungsform der Betätigungseinrichtung 22 einen Hebelarm im Wesentlichen von Null auf. Hierzu scheidet die Drehachse bzw. Längsachse 36 des Schließelements 24 die Drehachse des Arms 38 bzw. geht durch dessen Drehpunkt 48. Dadurch entsteht ein Hebelarm von Null.

Das Schließelement 24 der zweiten Ausführungsform ist dabei wie das Schließelement 24 der ersten Ausführungsform mit einem Kugelsegment 26 ausgebildet, dass in einem geschlossenen Zustand des Wastegate-Kanals 12 an dem konischen Anlageabschnitt 28 des Wastegate-Kanals 12 anliegt und mit diesem einen linieförmigen Kontakt in Form eines Kreises bildet. Ebenso wie in der ersten Ausführungsform dreht sich das Kugelsegment 26 in der zweiten Ausführungsform beim Schließvorgang nicht um eine Achse 30, die durch den Mittelpunkt 32 des Kugelsegments 26 verläuft, sondern der Mittelpunkt 32 des Kugelsegments 26 liegt zwischen der Dichtfläche und der Drehachse 30. Aus diesem Grund resultiert der Schließvorgang nicht nur aus einer reinen Drehbewegung sondern auch durch eine axiale Relativbewegung in Richtung der Dichtfläche.

Die Betätigungseinrichtung 22 kann, ähnlich wie in der ersten Ausführungsform, einen Arm aufweisen, wobei das Schließelement 24 mit seiner Achse 36 durch den Drehpunkt 48 des Arms verläuft bzw. die Drehachse des Arms 38 schneidet, im Gegensatz zu der ersten Ausführungsform. Des Weiteren kann der Arm 38 statt abgewinkelt ausgebildet zu sein, wie in der ersten Ausführungsform (Fig. 7-10), auch in Form einer Welle 56 ausgebildet sein, wie in den Fig. 11-13 gezeigt ist, die an ihrem Ende mit dem Schließelement 24 verbunden ist. Dies ist bei der ersten Ausführungsform ebenfalls möglich.

Bei der zweiten Ausführungsform schneidet die Achse bzw. Längsachse 36, des Schließelements 24 die Drehachse der Welle, wie in den Fig. 11 bis 13 dargestellt ist, bzw. deren Drehpunkt 48.

Durch diese Änderung der Schließkinematik, wie sie mit Bezug auf die beiden Ausführungsformen der Erfindung zuvor dargestellt wurde, können die benötigte Schließkraft und somit auch die Ausmaße des benötigten Aktuators reduziert werden. Durch die drastische Reduzierung des Hebelarms 40 und somit der Reduzierung der Stellkraft kann somit ein kompakterer elektrischer Aktuator eingesetzt werden, oder die Druckdose erheblich verkleinert werden zur Betätigung der Betätigungseinrichtung 22 und ihres Schließelements 24.

Ein weiterer Vorteil liegt darin, dass die sich durch die neue Kinematik ergebende Öffnungscharakteristik deutlich besser zu einem elektrischen Aktuator passt als dies bisher bei den Wastegate-Klappenlösungen der Fall ist.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar. Die zuvor beschriebenen Ausführungsformen sind dabei miteinander kombinierbar, insbesondere einzelne Merkmale davon.

Insbesondere kann die Betätigungseinrichtung 22 und ihre Verbindung mit dem Schließelement 24 beliebig ausgeführt sein, neben einem Arm 38 können auch andere Einrichtungen und Anordnungen vorgesehen werden zum Einschwenken des Schließelements 24 gemäß der erfindungsgemäßen Schließkinematik. Des Weiteren kann auch das Schließelement 24 selbst andere Formen aufweisen, als die zuvor beschriebenen Formen von Kugelsegment 26 oder rundem bzw. kugelförmigen Abschnitt 34.

Des Weiteren ist die Betätigungseinrichtung nicht nur bei einem Wastegate-Kanal eines Turbinengehäuses anwendbar, sondern auch bei einem Wastegate beispielsweise für einen Verdichter bzw. zum Umgehen eines Verdichters, um nur ein Beispiel zu nennen.

## Patentansprüche

1. Turbolader, welcher ein Turbinengehäuse (10) mit einem Wastegate-Kanal (12) aufweist, wobei der Wastegate-Kanal (12) über eine Betätigungseinrichtung (22) geöffnet und geschlossen werden kann, wobei die Betätigungseinrichtung (22) ein Schließelement (24) aufweist, das in den Wastegate-Kanal (12) einschwenkbar ist, um diesen zu schließen,
**dadurch gekennzeichnet, dass** das Schließelement (24) zumindest in einem Bereich in welchem es an einer korrespondierenden Anlagefläche (28) des Wastgate-Kanals (12) anliegt ein Kugelsegment aufweist und eine Längsachse (36) des Schließelements (24) in einem vorbestimmten Abstand parallel zu einer Achse (30) verläuft, die durch den Mittelpunkt (32) des Kugelsegmentes des Schließelements (22) verläuft.

2. Turbolader nach Anspruch 1,
**dadurch gekennzeichnet,**
**dass** eine korrespondierende Anlagefläche (28) des Wastgate-Kanals (12), an welchem das Schließelement (24) in geschlossenem Zustand anliegt, so ausgebildet ist, dass die korrespondierende Anlagefläche (28) mit dem Schließelement (24) im Wesentlichen einen Linienkontakt herstellt, wenn das Schließelement (24) den Wastegate-Kanal (12) verschließt.

3. Turbolader nach Anspruch 2,
**dadurch gekennzeichnet,**
**dass** die Anlagefläche (28) des Wastegate-Kanals (12) konisch ausgebildet ist und mit dem Schließelement (24) einen im Wesentlichen kreisförmigen Linienkontakt bildet, wenn der Wastegate-Kanal (12) mit dem Schließelement (24) verschlossen ist.

4. Turbolader nach Anspruch 3,
**dadurch gekennzeichnet,**
**dass** die Betätigungseinrichtung (22) einen Arm (38) aufweist, der in Form einer durchgehenden Welle (56) mit einer Drehachse (48) ausgebildet ist und der mit dem Schließelement (24) verbunden ist und über welchen das Schließelement (24) um die Drehachse (48) in eine geöffnete und geschlossene Position schwenkbar ist, in welcher der Wastegate-Kanal (12) vollständig geöffnet bzw. geschlossen ist.

5. Turbolader nach Anspruch 4,
**dadurch gekennzeichnet,**
**dass** die Längsachse (36) des Schließelements (24) zu der Drehachse des Arms (38) beabstandet ist.

6. Turbolader nach Anspruch 4,
**dadurch gekennzeichnet,**
**dass** die Längsachse (36) des Schließelements (24) die Drehachse des Arms (38) schneidet.

7. Turbolader nach wenigstens einem der Ansprüche 4 bis 6,
**dadurch gekennzeichnet,**
**dass** der Arm (38) abgewinkelt ausgebildet ist.

8. Turbolader nach Anspruch 7,
**dadurch gekennzeichnet,**
**dass** der abgewinkelte Abschnitt (52) des Arms (38) um im Wesentlichen 90° abgewinkelt ist.

9. Turbolader nach Anspruch 7 oder 8,
**dadurch gekennzeichnet,**
**dass** der abgewinkelte Abschnitt (52) des Arms (38) eine Aufnahme (54) für das Schließelement (24) aufweist.

10. Turbolader nach wenigstens einem der Ansprüche 1 bis 9,
**dadurch gekennzeichnet,**
**dass** die Betätigungseinrichtung (22) über wenigstens einen elektrischen Aktuator betätigbar ist.

## Claims

1. Turbocharger, which has a turbine housing (10) with a wastegate duct (12), wherein the wastegate duct (12) can be opened and closed by means of an operating device (22), wherein the operating device (22) has a closure element (24) which can be pivoted into the wastegate duct (12) in order to close the latter,
**characterized in that** the closure element (24), at least in a region in which it bears against a corresponding abutment surface (28) of the wastegate duct (12), has a spherical segment, and a longitudinal axis (36) of the closure element (24) runs parallel to, and at a predetermined distance from, an axis (30) which runs through the central point (32) of the spherical segment of the closure element (22).

2. Turbocharger according to Claim 1,
**characterized**
**in that** a corresponding abutment surface (28) of the wastegate duct (12), against which the closure element (24) bears in the closed state, is designed such that the corresponding abutment surface (28) produces substantially linear contact with the closure element (24) when the closure element (24) closes the wastegate duct (12).

3. Turbocharger according to Claim 2,
**characterized**
**in that** the abutment surface (28) of the wastegate duct (12) is of conical form and generates substantially circular linear contact with the closure element (24) when the wastegate duct (12) is closed by means of the closure element (24).

4. Turbocharger according to Claim 3,
**characterized in that** the operating device (22) has an arm (38) which is designed in the form of a continuous shaft (56) with an axis of rotation (48), which arm is connected to the closure element (24) and by means of which arm the closure element (24) can be pivoted about the axis of rotation (48) into an open position and a closed position, in which the wastegate duct (12) is respectively fully open and fully closed.

5. Turbocharger according to Claim 4,
**characterized**
**in that** the longitudinal axis (36) of the closure element (24) is spaced apart from the axis of rotation of the arm (38).

6. Turbocharger according to Claim 4,
**characterized**
**in that** the longitudinal axis (36) of the closure element (24) intersects the axis of rotation of the arm (38).

7. Turbocharger according to at least one of Claims 4 to 6,
**characterized**
**in that** the arm (38) is of angled form.

8. Turbocharger according to Claim 7,
**characterized**
**in that** the angled section (52) of the arm (38) is angled through substantially 90°.

9. Turbocharger according to Claim 7 or 8,
**characterized**
**in that** the angled section (52) of the arm (38) has a receptacle (54) for the closure element (24).

10. Turbocharger according to at least one of Claims 1 to 9,
**characterized**
**in that** the operating device (22) can be operated by means of at least one electric actuator.

## Revendications

1. Turbocompresseur qui comprend un carter de turbine (10) avec un canal Wastegate (12), le canal Wastegate (12) pouvant être ouvert et fermé par l'intermédiaire d'un dispositif d'actionnement (22), le dispositif d'actionnement (22) comprenant un élément de fermeture (24) qui peut être pivoté dans le canal Wastegate (12) afin de le fermer,
**caractérisé en ce que** l'élément de fermeture (24) comprend, au moins dans une zone dans laquelle il s'appuie contre une surface d'appui (28) correspondante du canal Wastegate (12), un segment sphérique et un axe longitudinal (36) de l'élément de fermeture (24) s'étend, à une distance prédéterminée, parallèlement à un axe (30) qui traverse le centre (32) du segment sphérique de l'élément de fermeture (22).

2. Turbocompresseur selon la revendication 1,
**caractérisé en ce que**
une surface d'appui (28) correspondante du canal Wastegate (12), contre laquelle l'élément de fermeture (24) s'appuie dans l'état fermé, est conçue de façon à ce que la surface d'appui (28) correspondante établit globalement un contact de ligne avec l'élément de fermeture (24) lorsque l'élément de fermeture (24) ferme le canal Wastegate (12).

3. Turbocompresseur selon la revendication 2,
**caractérisé en ce que**
la surface d'appui (28) du canal Wastegate (12) est de forme conique et forme, avec l'élément de fermeture (24), un contact de ligne globalement circulaire lorsque le canal Wastegate (12) est fermé avec l'élément de fermeture (24).

4. Turbocompresseur selon la revendication 3,
**caractérisé en ce que**
le dispositif d'actionnement (22) comprend un bras (38) qui est conçu sous la forme d'un arbre continu (56) avec un axe de rotation (48) et qui est relié avec l'élément de fermeture (24) et par l'intermédiaire duquel l'élément de fermeture (24) peut être pivoté autour de l'axe de rotation (48) vers une position ouverte et fermée, dans laquelle le canal Wastegate (12) est ouvert ou fermé complètement.

5. Turbocompresseur selon la revendication 4,
**caractérisé en ce que**
l'axe longitudinal (36) de l'élément de fermeture (24) est à distance de l'axe de rotation du bras (38).

6. Turbocompresseur selon la revendication 4,
**caractérisé en ce que**
l'axe longitudinal (36) de l'élément de fermeture (24) coupe l'axe longitudinal du bras (38).

7. Turbocompresseur selon l'une des revendications 4 à 6,
**caractérisé en ce que**
le bras (38) est coudé.

8. Turbocompresseur selon la revendication 7,
**caractérisé en ce que**
la portion coudée (52) du bras (38) est coudée globalement sur 90°.

9. Turbocompresseur selon la revendication 7 ou 8,
**caractérisé en ce que**
la portion coudée (52) du bras (38) comprend un logement (54) pour l'élément de fermeture (24).

10. Turbocompresseur selon au moins l'une des revendications 1 à 9,
**caractérisé en ce que**
le dispositif d'actionnement (22) peut être actionné par l'intermédiaire d'au moins un actionneur électrique.
